# EUROPEAN PATENT SPECIFICATION

(11) **EP 3 182 555 B1**
(45) Date of publication and mention of the grant of the patent: **17.04.2019**
(21) Application number: 15201336.3
(22) Date of filing: 18.12.2015
(51) Int. Cl.: H02J 50/10, H01R 13/00, H04B 5/00, H02J 50/80, H01F 3/10, H01F 38/14

(54) **CONTACTLESS CONNECTOR AND CONTACTLESS CONNECTOR SYSTEM**
KONTAKTFREIER VERBINDER UND KONTAKTFREIES VERBINDERSYSTEM
CONNECTEUR SANS CONTACT ET SYSTÈME DE CONNECTEUR SANS CONTACT

(43) Date of publication of application: 21.06.2017
(73) Proprietor: TE Connectivity Nederland B.V., 5222 AR 's Hertogenbosch (NL)
(72) Inventor: HABRAKEN, Gied, 5551 HX Valkenswaard (NL)
(74) Representative: Grünecker Patent- und Rechtsanwälte PartG mbB

(56) References cited:
- EP-A1- 2 581 994
- WO-A1-2008/044875

## Description

The present invention relates to a power receiving connector for a contactless connector system, to a contactless connector system, and to a belonging method of controlling a contactless connector system for inductively transmitting power between a power transmitting connector and a power receiving connector.

The principle of inductive energy transfer serves in a plurality of applications as physical basis of technical development of a large number of applications. An essential element in case of an inductive energy transfer is a loosely coupled conductor, which represents magnetic coupling of an inductor or a magnetic winding in a primary sided power transmission device with an inductor or a magnetic winding in a target device. During operation, energy is inductively transferred between the primary sided part and the secondary sided part. If the secondary sided part is removed from the primary sided part, the energy transfer is interrupted. In this context, the term "contactless" is used to indicate that energy transfer can be realized without any ohmic connection between corresponding electrical contacts on the primary sided and secondary sided parts, respectively.

Omission of electrical contacts is of great importance for many applications in different areas of application. This applies specifically to applications with high demands in the mechanical set up of the electric connections between the power source and sink in which technically complex plugs and cables can be avoided by application of inductive energy transfer (IE). Further, technical energy supply system components based on IE can be protected from environmental impacts without making the mechanical set up unnecessarily complex by appliance of outsourced connectors. Moreover, in some application areas for IE, the use of electrical connections has to be avoided in light of technical feasibility. For example, in explosion prone environments or during operation of the system components in conductive and/or aggressive media it may be technically advantageous to rely on systems that allow contactless energy transfer. Furthermore, the use of IE can improve the reliability of systems in which the devices and eventually the electrical contacts of these devices are exposed to high stress. This is the case on the one hand for systems with rotating or moveable parts, since components based on IE allow avoiding the use of wiper contacts, which are prone to wear due to friction. In addition, IE technologies can be advantageously used in devices with connectors, which would have to be otherwise dimensioned for a plurality of plugs.

Contactless connectors that reliably transmit electric power, signals, and data without an ohmic contact between each other are used in many different applications fields. In particular, in the field of industrial robot systems where moving parts and electronic components that need to stay reliably connected in harsh environments are involved, contactless connector system are needed which effectively transmit power and data and are not affected by harsh environments, such as water, dust or vibrations.

An example of such a contactless connector system is disclosed in European patent specification EP 2581994 B1. According to this document, a contactless connector system is provided which has primary sided and secondary sided inductive coupling elements that can be mated for wirelessly transmitting electric power from the primary to the secondary side. Moreover, a bi-directional data transmission is effected via two antenna elements establishing a radio frequency data link between the mated two parts of the connector system.

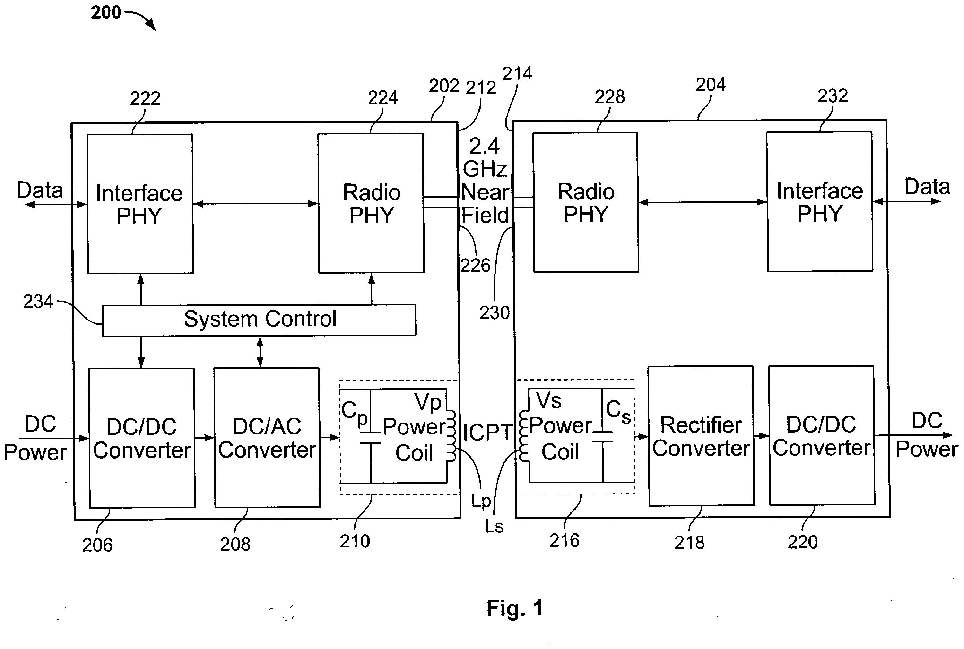

Presently, the company TE Connectivity produces a contactless connector system under the name ARISO, which is schematically depicted in Fig. 1. This known contactless connector system 200 comprises a power transmitting connector 202 and a power receiving connector 204. The power transmitting connector 202 has a primary sided inductive coupling element Lₚ (also referred to as primary sided power coil) which is powered from an input power source. The input power may for instance be a DC power which is transformed into an alternating voltage by means of a DC/DC converter 206 and a subsequent DC/AC converter 208. As this is schematically shown in Fig. 1, the power coil Lₚ is part of a resonant circuit 210 which comprises a capacitor Cₚ in parallel to the power coil Lₚ.

When the two mating surfaces 212, 214 of the power transmitting connector 202 and the power receiving connector 204 are in sufficiently close contact, the secondary power coil Lₛ is magnetically coupled to the primary sided power coil Lₚ. The secondary sided power coil Lₛ is part of a secondary sided resonant circuit 216. By means of the electromagnetic coupling, power is transmitted from the primary side to the secondary side. The secondary sided resonant circuit 216 is connected to a rectifier circuit 218 (comprising for instance a bridge rectifier) and a subsequent DC/DC converter 224 generating a regulated DC output power.

In addition to the power transmission, the contactless connector system 200 is further equipped with means for establishing a bi-directional data link for transmitting data through the connector system. A primary sided data communication interface 222 communicates with a first external component connected to the power transmitting connector 202 (not shown in the Figures). A primary sided data transceiver element 224 having one or more antenna elements 226 converts the data signals from the communication interface 222 into a radio signals and accordingly converts received radio signals into electrical data signals which are input into the communication interface 222.

The power receiving connector 204 is provided with a corresponding secondary sided data transceiver element 228 having one or more antennae 230 which receive signals from the primary side and transmit signals from the secondary side towards the primary side via a wireless near field radio link. A secondary sided data communication interface 232 is connected to the secondary sided data transceiver element 228 for communicating with a second external component (not shown in the Figures) connected to said power receiving connector 204.

A primary sided control unit 234 is provided for controlling the operation of the resonant circuit 210, the primary sided data communication interface 222, and the primary sided data transceiver element 224.

However, known contactless connector systems which transmit both power and data can only be provided with updated firmware on the secondary side when there is sufficient power supply via the inductive transfer from the primary side. Moreover, a maximum power control always involves a hardware modification.

WO 2008/044875 A1 relates to a rechargeable power supply, a battery device, contact-less charger systems and a method for charging a rechargeable battery cell. According to this document, a contact- less charger system includes a primary charging unit having a primary coil and a contact- less receiving module, a secondary charging unit having a secondary coil magnetically coupled to the primary coil and a contact- less sending module, and a battery for receiving a charging voltage from the secondary charging unit. The primary charging unit has means for generating an AC power pulse over common frequency according to application of common AC power, and applying it to the primary coil to induce a high frequency AC power pulse to the secondary coil. The secondary charging unit has means for transmitting charging status information of battery to the primary charging unit using a ceasing time between AC voltage pulses induced by the secondary coil. Thus, power signals between the primary and secondary coils and communication signals between the contact-less sending and receiving modules are not overlapped in aspect of time.

There is still a need for a contactless connector and a contactless connector system that allows access to the secondary sided connector even without a power supply from the primary side.

This object is solved by the subject matter of the independent claims. Advantageous embodiments of the present invention are the subject matter of the dependent claims.

A power receiving connector according to the present invention comprises a secondary sided inductive coupling element (Ls) that is operable to receive electric power when being electromagnetically coupled with a primary sided inductive coupling element (Lp) of said power transmitting connector, and a power input/output terminal for outputting the received electric power to a secondary sided external component connected to said power receiving connector, or for receiving power from an external secondary sided power source. A secondary sided data transceiver element is provided which in the mated state of the power transmitting and the power receiving connectors is operable to form a data link with a primary sided data transceiver element, and a secondary sided data communication interface is connected to said second data transceiver element for communicating with said secondary sided external component. The power receiving connector further comprises a secondary sided control unit for controlling an operation of said secondary sided data communication interface and said secondary sided data transceiver element, said secondary sided control unit having a power supply terminal for being supplied with electrical power.

The present invention is based on the idea that the power receiving connector further comprises a switching unit that is connected to said power input/output terminal for controlling the electric power output at the power input/output terminal, wherein the switching unit is further operable to connect said power supply terminal either to the secondary sided inductive coupling element (Ls) or to the power input/output terminal.

By providing such a switching unit the secondary sided control unit of the power receiving connector can also be powered externally via the power input/output terminal in case the power receiving connector does not receive power from the primary side. This is advantageous for several scenarios. Firstly, it may be necessary to perform maintenance of the power receiving connector without having a connection to the corresponding power transmitting connector, e. g. for installing or modified the firmware stored in the secondary sided control unit. Secondly, in cases where the corresponding power transmitting connector is connected, but does not provide electric power, data reception and/or transmission is still possible by using the external power supply on the secondary side for powering the transceiver element, the data communication interface, and the secondary sided control unit. This may for instance be advantageous during start-up of the system.

Moreover, the switching unit according to the present invention is connected between the power input/output terminal and the secondary sided inductive coupling element in a way that the power supply to the power input/output terminal can be interrupted by means of the switching unit. This allows for a particularly simple and effective way of controlling the maximum power which is output by the power receiving connector to a secondary sided external component.

For example, the switching unit can be controllable by the secondary sided control unit in response to parameters measured at the power receiving connector (such as temperature or the distance between the power receiving connector and the power transmitting connector). Furthermore, the secondary sided control unit may also receive information about the power transmitted to the power input/output terminal and control the switching unit to disconnect the power input/output terminal from electric power if the power is too high. Alternatively or additionally, the switching unit may also be controlled to adapt the maximum power control to application environment parameters, such as the power requirements of the external component which is connected to the power receiving connector according to the present invention. No hardware modifications are necessary for performing such adaptations.

In case of a short circuit at the power input/output terminal, the switching unit may also be controlled to switch off the output.

Advantageously, the power output may also be interrupted in response to a data signal received from the primary side. This is in particular advantageous for reacting to measurements performed by the power transmitting connector.

According to an advantageous embodiment of the present invention, the switching unit comprises a metal oxide semiconductor field effect transistor (MOSFET) with a gate terminal, a source terminal, and a drain terminal, the MOSFET being operable to provide a connection from the secondary sided inductive coupling element (Ls) to the power input/output terminal via a drain-source conductive channel, and which is further operable to provide a connection from the power input/output terminal to the power supply terminal of the secondary sided control unit via a drain-source body diode. As this is generally known, an intrinsic body diode, which is also called reverse diode, is formed in the body/drain p-n junction connected between the drain and source of the MOSFET. The body diode is sometimes used in circuits that require a path for the reverse drain current (the so-called freewheeling current), such as half-bridge and full-bridge converter circuits in motor control applications.

According to the present invention, an external secondary sided power source can be connected with the power input/output terminal in order to power the secondary sided control unit via the body diode. Advantageously, a p-channel MOSFET of the enhancement type is used. The enhancement type ensures that the MOSFET is normally OFF, i. e. that no drain current can flow when the gate-source voltage is zero. This prevents the transistor from being ON during start-up when the controller is not yet ready. However, it is clear for a person skilled in the art that also other suitable semiconductor switches or more complex circuit arrangements can be used when implementing the switching unit.

Moreover, a diode can be provided between the power supply terminal of the secondary sided control unit and the switching unit, the cathode of the diode being connected with the power supply terminal, so that a current flow out of the secondary sided control unit is blocked. This is in particular advantageous when the supply voltage is connected to the power supply terminal via an input capacitor.

In order to control the switching unit, the secondary sided control unit may comprise a control output terminal for providing a control signal to a control input terminal of the switching unit. Thereby, the switching unit can be opened and closed in response to any information that is available to the secondary sided control unit. For instance, in case that the power receiving connector comprises a sensing element for detecting the temperature, the switching unit may be actuated in response to an elevated temperature. Moreover, the secondary sided control unit may also receive information about the power sent to the output. In case that the power level is too high, the switching unit can be actuated to disconnect the power input/output terminal so that no power is output to the secondary sided external component.

According to an advantageous embodiment, a gate terminal of said MOSFET is connected to a drive circuit, said drive circuit being controlled by said secondary sided control unit. The drive circuit generates the necessary input voltage for controlling the MOSFET. In particular, this drive circuit may comprise a level shifting element. The level shifting element comprises for instance a bipolar transistor with a base terminal, a collector terminal, and an emitter terminal, wherein the base terminal is connected to the control output terminal of said secondary sided control unit, the emitter terminal is connected to a reference potential and the collector terminal is connected to one end of a voltage divider, the other end of the voltage divider being connected the source terminal of the MOSFET, wherein the gate terminal of the MOSFET is connected to an output node of said voltage divider. Of course, also a MOSFET or an integrated level shifter can be used instead of the bipolar transistor as this is known for a person skilled in the art.

The present invention also relates to a contact connector system comprising a power receiving connector as outlined above and a corresponding mateable power transmitting connector.

The power transmitting connector has a primary sided inductive coupling element (Lp) that is connected to a power input terminal connectable to a power source providing an input power, and a resonant circuit for generating a magnetic field at said first inductive coupling element (Lp) from said input power. A primary sided data transceiver element is provided for transmitting and receiving data, so that a data link is formed between said transmitting and receiving connectors. A primary sided data communication interface is connected to said primary sided data transceiver element for communicating with a first external component connected to said power transmitting connector, and a primary sided control unit is provided for controlling an operation of said resonant circuit, said primary sided data communication interface, and said first data transceiver element.

In order to allow a unidirectional or bidirectional communication between the power transmitting connector and the power receiving connector, the primary sided data transceiver element comprises a first antenna element and said secondary sided data transceiver element comprises a second antenna element, wherein said antenna elements in a mated state of the connector system are operable to allow a radio frequency communication.

The present invention further relates to a method of controlling a contactless connector system for inductively transmitting power between a power transmitting connector and a power receiving connector, the method comprising, in a first operational mode, the steps of:
generating a magnetic field at a first inductive coupling element (Lp) by transforming an input power by means of a resonant circuit,
operating a secondary sided inductive coupling element to receive electric power when being electromagnetically coupled with said primary sided inductive coupling element,
establishing a data link between said power transmitting connector and said power receiving connector,
wherein the method further comprises, in a second operational mode, the steps of:
controlling a switching unit to disconnect a power supply terminal of a secondary sided control unit from the secondary sided inductive coupling element (Ls) and to connect the power supply terminal to a power input/output terminal connectable to an external secondary sided power source.

Preferably, the first operational mode is a regular operating mode where the secondary sided control unit is supplied with power received by the secondary sided inductive coupling element when being electromagnetically coupled with said primary sided inductive coupling element, and the second operational mode is a maintenance mode where the secondary sided inductive coupling element is not coupled to the primary sided inductive coupling element. Advantageously, according to the present invention the secondary sided control unit can be powered without the need of a power supply from the primary side. Procedures that only involve the secondary sided connector, such as an update of the firmware or an adaptation of operational parameters to the operating environment where the secondary sided connector is assembled, can easily be performed. For instance, an external secondary sided DC power source can be connected to the power input/output terminal and diagnostic and/or programming data can be transmitted to/from an external controller via a secondary sided data interface of the power receiving connector.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1**: is a block diagram of a conventional contactless connector system;
- **FIG. 2**: is a perspective drawing of a contactless connector system according to the present invention;
- **FIG. 3**: is a block diagram of a contactless connector system having a power receiving connector according to the present invention;
- **FIG. 4**: is a circuit diagram of a switching unit according to the present invention;
- **FIG. 5**: is a schematic representation of a p-channel enhancement MOSFET used in the switching unit according to the present invention;
- **FIG. 6**: is a circuit diagram of a switching unit according to a further embodiment of the present invention.

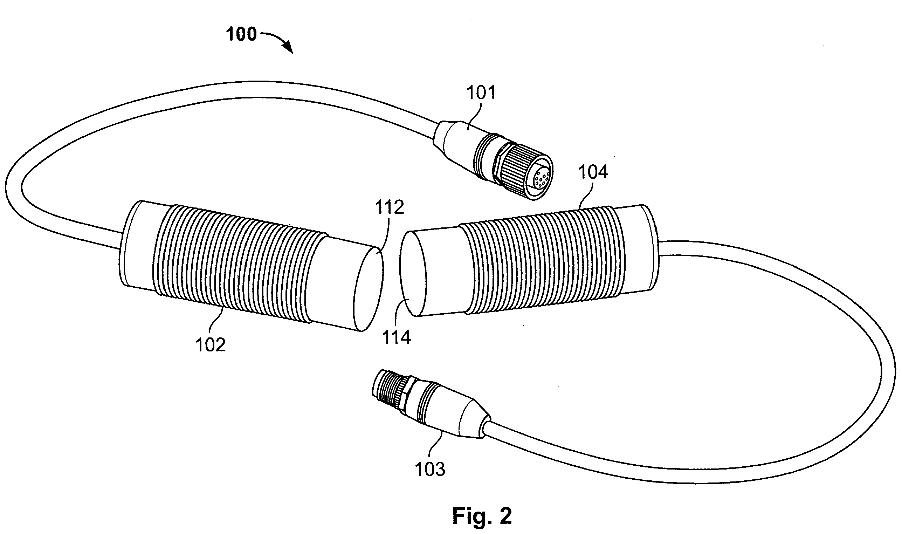

The present invention will now be explained in more detail with reference to the Figures and firstly referring to Fig. 2.

Fig. 2 shows a perspective view of a contactless connector system 100 according to a possible embodiment of the present invention. The contactless connector system 100 comprises a power transmitting connector 102 which can be connected to a power source (not shown in the Figures) via a first terminal 101. The power transmitting connector 102 defines a primary side of the contactless connector system 100. The contactless connector system 100 further comprises a power receiving connector 104 which defines a secondary side of the contactless connector system 100. A second terminal 103 is provided for connecting the system to a secondary sided external component (not shown in the Figures).

When the mating surfaces 112, 114 of the power transmitting connector 102 and the power receiving connector 104, respectively, are brought sufficiently close to each other, the power receiving connector 104 is electromagnetically coupled with the power transmitting connector 102 for so that a contactless inductive energy transfer from the primary side to the secondary side can take place.

In addition to allowing the inductive power transfer, the contactless connector system 100 is also able to provide a unidirectional or a bi-directional data link between the two connectors 102, 104.

The contactless connector system 100 as shown in Fig. 2 has the advantage of having a high degree of freedom of movement that includes tilt, angle, and misalignment. Moreover an improved design flexibility and cost savings can be achieved by transferring power and data signals through fluids and (non-ferromagnetic) walls. Moreover, the connection provides a rotational freedom that enables a faster rotation by angles of more than 360°. The contactless connector system 100 guarantees unlimited mating cycles in wet and dusty environments, thus reducing maintenance costs. Safe and reliable connections can be provided in harsh environments due to vibration resistance and fully sealed couplers.

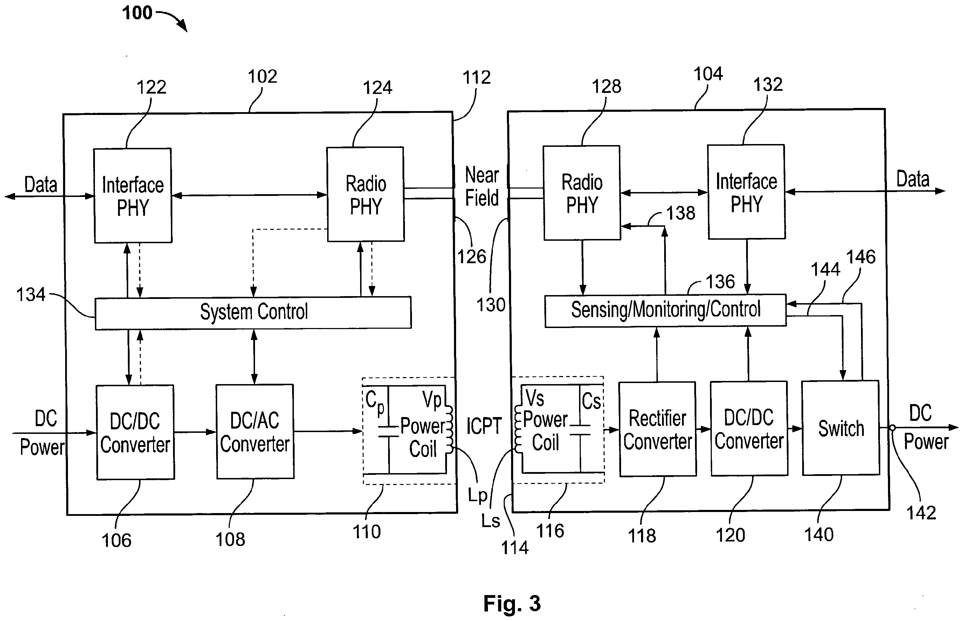

Fig. 3 shows a block diagram of an advantageous embodiment of the contactless connector system 100 according to the present invention. As already mentioned with reference to Fig. 2, the contactless connector system 100 comprises a power transmitting connector 102 and a power receiving connector 104. The power transmitting connector 102 has a primary sided inductive coupling element Lₚ (also referred to as primary sided power coil) which is powered from an input power source. The input power may for instance be a DC power which is transformed into an alternating voltage by means of a DC/DC converter 106 and a subsequent DC/AC converter 108. As this is schematically shown in Fig. 3, the power coil Lₚ is part of a resonant circuit 110 which comprises a capacitor Cₚ in parallel to the power coil Lₚ. The resonant circuit 110, however, may of course also be a serial resonant circuit.

When the two mating surfaces 112, 114 of the power transmitting connector 102 and the power receiving connector 104 are sufficiently close to each other, the secondary sided power coil Lₛ is magnetically coupled to the primary sided power coil Lₚ. The secondary sided power coil Lₛ is part of a secondary sided resonant circuit 116. By means of the electromagnetic coupling, power is transmitted from the primary side to the secondary side. The secondary sided resonant circuit 116 is connected to a rectifier circuit 118 (comprising for instance a bridge rectifier) and a subsequent DC/DC converter 124 generating a regulated DC output power.

In addition to the power transmission, the contactless connector system 100 is further equipped with means for establishing a data link for transmitting data through the connector system. As shown in the drawings and as explained in the following, the communication may be bi-directional. However, also a unidirectional communication from the primary side to the secondary side or from the secondary side to the primary side, respectively, may also be used with the present invention. A primary sided data communication interface 122 communicates with a first external component connected to the power transmitting connector 102 (not shown in the Figures). A primary sided data transceiver element 124 having one or more antenna elements 126 converts the data signals from the communication interface 122 into a radio signals and accordingly converts received radio signals into electrical data signals which are input into the communication interface 122.

The power receiving connector 104 is provided with a corresponding secondary sided data transceiver element 128 having one or more antenna elements 130 which receive signals from the primary side and transmit signals from the secondary side towards the primary side via a wireless near field radio link. A secondary sided data communication interface 132 is connected to the secondary sided data transceiver element 128 for communicating with a second external component (not shown in the Figures) connected to said power receiving connector 104.

A primary sided control unit 134 is provided for controlling the operation of the resonant circuit 110, the primary sided data communication interface 122, and the primary sided data transceiver element 124. Broken lines indicate an optional feedback from the primary sided data communication interface 122 and the primary sided data transceiver element 124 to the primary sided control unit 134. The feedback provides information about parameters on the secondary side in case that a bidirectional communication between the power transmitting connector 102 and the power receiving connector 104 is implemented.

According to the present invention, the power receiving connector 104 comprises a switching unit 140 which is connected between the output of the DC/DC converter 120 and the terminal 142 that is connected to an external component (not shown in the Figures) for providing DC power. By actuating the switching unit 140 the connection between the DC/DC converter 120 and the terminal 142 can be interrupted. The control signal 144 for actuating the switching unit 140 is generated by the secondary sided control unit 136.

According to the present invention, thereby a maximum power switch off for limiting the output power at the terminal 142 can be achieved. Software is able to control the continuous output power based on parameters such as temperature, device type, distance, or other parameters without the need to modify the hardware.

The switching unit 140 according to the present invention has the further function of providing a path from the terminal 142 (which is therefore also called power input/output terminal in the present application) to supply power to the secondary sided control unit 136. This is indicated by a power supply line 146 in Fig. 3. In order to provide power to the secondary sided control unit 136, an external power source, for instance a 24 V external power supply can be connected to the power input/output terminal 142. This external power supply can for instance be part of the external component to which the power receiving connector 104 is mounted. By powering the secondary sided control unit 136 from the secondary side without the need of the connection to the primary side, also the data link to the primary side can be maintained even if no power is received from the primary side.

Optionally, the secondary sided control unit 136 may also comprise sensing and monitoring functions. For instance, the temperature of the power receiving connector can be monitored and the switching unit 140 can be actuated in response to the measured temperature. Moreover, the secondary sided control unit 136 may be monitoring the output voltage generated by the DC/DC converter 120 and switch off the connection to the power input/output terminal 142 in case that the power to be output exceeds a pre-defined threshold value.

The power receiving connector 104 may optionally monitor at least one secondary sided operational parameter and generate a control signal 138 which is transmitted to the primary side to be evaluated by the primary sided control unit 134. In other words, the data link between the power transmitting connector 102 and the power receiving connector 104 carries in addition to the payload data that are communicated between the two components which are interconnected by the contactless connector system additional control data which provide information about secondary sided parameters to the primary sided control unit 134. This information allows improving the overall performance of the contact connector system. Moreover, also the primary sided control unit 134 may comprise means for measuring one or more operational parameters on the primary side. In particular, the following parameters can be monitored and controlled.

On the transmitter side following parameters can be measured:
a. The input voltage and input current, and as a result the input power is known
b. The temperature of the power transmitting connector 102
c. The input voltage for the DC/AC converter 108
d. The voltage Vₚ across the primary sided power coil Lₚ and the current through the primary sided power coil Lₚ, and as a result the transmitted power is known
e. Presence of data on the primary sided data communication interface 122, i. e. whether data is transmitted or not

On the receiver side the following parameters can be measured:
a. The output voltage and output current, and as a result the output power is known.
b. The temperature of the power receiving connector 104
c. The voltage Vₛ across the secondary sided power coil Lₛ and the current through the secondary sided power coil Lₛ, and as a result the received power is known
d. Presence of data on the secondary sided data communication interface 132, i. e. whether data is transmitted or not

Having the information about Vₚ and Vₛ allows system control to determine the distance between the power transmitting connector 102 and the power receiving connector 104. Knowing the distance enables functionalities such as a reliable power-over-distance de-rating.

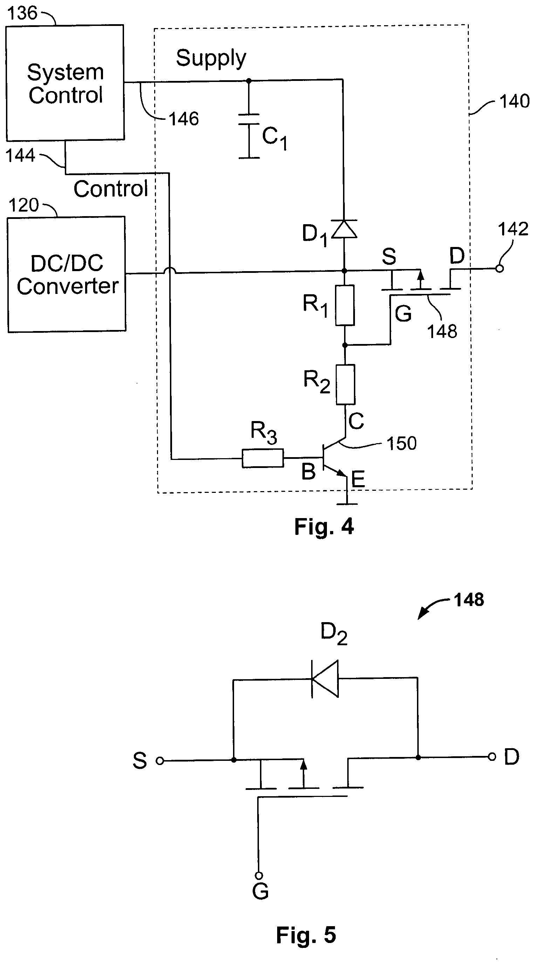

Fig. 4 shows a possible implementation of the switching unit 140. According to this embodiment, a MOSFET 148 is connected between the output of the DC/DC converter 120 and the power input/output terminal 142. The MOSFET 148 is a p-channel enhancement type MOSFET. Therefore, it is normally off, i. e. no current flow is possible between the drain D and source S terminals when the voltage at the gate terminal G is zero.

The gate terminal G of the MOSFET 148 is connected to the control output 144 of the secondary sided control unit 136 for being controlled by the secondary sided control unit 136.

A drive circuit for driving the gate of the MOSFET 148 comprises a level shifter having a bipolar transistor 150 and a voltage divider formed by two resistors R1 and R2. The control output 144 of the secondary sided control unit 136 is connected via a further resistor R3 to the base B of the bipolar transistor 150.

Thus, the secondary sided control unit 136 can connect or disconnect the power input/output terminal 142 with the DC/DC converter 120. In particular when the secondary sided control unit further comprises sensing and monitoring means, software controlled maximum power output control can be achieved.

Furthermore, the MOSFET 148 may also provide a reverse current path for supplying power to the secondary sided control unit 136. As can be seen from the equivalent circuit shown in Fig. 5, and as is generally known, MOSFETs have an intrinsic body diode D2 which is formed in the body/drain p-n junction connected between the drain and source regions of the MOSFET. The intrinsic body diode D2 can be used for supplying power to the power supply input 146 of the secondary sided control unit 136. To this end the power input/output terminal 142 has to be connected to an external power supply, for instance 24 V (not shown in the Figures). Alternatively, also an external diode can be added to the circuit in addition to the intrinsic body diode D2.

Such an external power supply is useful in situations where the secondary sided power receiving connector 104 is not connected to the primary sided power transmitting connector 102, or where no power is supplied from the primary side. For instance for maintenance procedures such as update of the firmware of the secondary sided control unit 136, or during start up of the contactless connector system 100, this is an advantageous feature.

The power supply input 146 may be connected with an input capacitor C1. A diode D1 may be provided in order to block a discharging of the capacitor C1.

in summary, providing a switching unit according to the present invention has the advantage that the output of power can be switched on and off by means of software. The power of the contactless connector system can be controlled by means of software without the need of modifying the hardware. In case that the secondary sided control unit 136 receive information about the power that is sent to the output, it is able to switch of the output in case the power is too high. Furthermore, in case of a short circuiting at the output, the secondary sided control unit 136 is able to switch off the output.

Moreover, in case that the power receiving connector 104 does not receive power from the power transmitting connector 102, the secondary sided control unit 136 can be powered from the outside by connecting an external power supply to the power input/output terminal 142. In this case, the body diode D2 of the p-channel MOSFET is conducting and transfers power to the secondary sided control unit 136. The use of an external power supply allows maintaining the data link even if the power receiving connector does not receive power from the primary side.

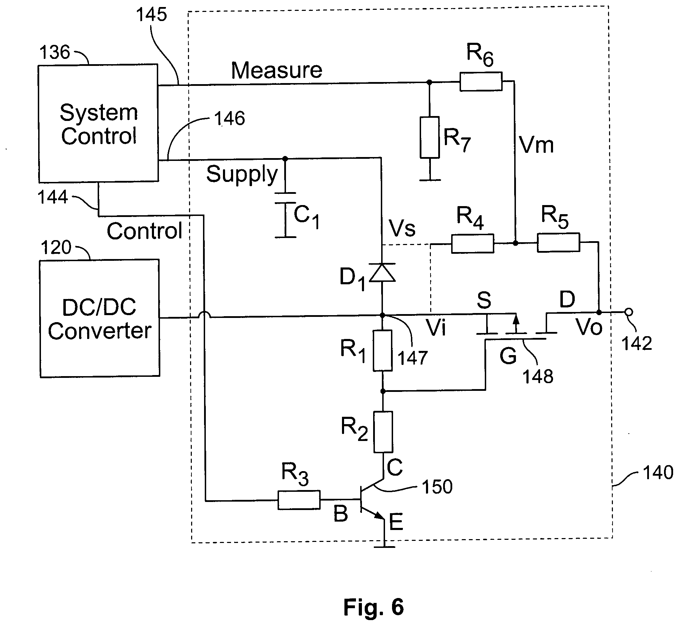

Fig. 6 shows a further embodiment of the switching unit 140 according to the present invention. In addition to the components already explained with reference to Fig. 4, the switching unit may further comprise a measurement section that is operable to measure the difference between the voltage of the DC/DC converter 120 and the voltage at the power input/output terminal 142. Such a measurement can be used e. g. for determining whether a short circuit occurs at the output.

As can be seen from Fig. 6, the secondary sided control unit 136 comprises a further terminal for receiving a measurement signal 145. The terminal is connected to a resistor network comprising resistors R4, R5, R6, and R7. As indicated by broken lines, the resistor R4 may either be connected to the node 147 between the source terminal S of the MOSFET 148 and the output of the DC/DC converter 120, or to the power supply 146 to secondary sided control unit, depending on whether the voltage Vi or the voltage Vs is to be monitored.

The following scenarios have to be considered. Firstly, the DC/DC converter 120 can be switched off and the output switch 148 is open. In this case and for R4 being connected to the node 147, the voltage Vi is 0 V and the voltage Vo is 0 V, consequently, the voltage Vm is also 0 V. Further, when the DC/DC converter 120 is operating normally, providing a DC voltage of 24 V, and the output switch 148 is open, Vi equals 24 V, and Vo equals 0 V. Therefore, a value of 12 V is measured as Vm, provided that the load resistance is much lower in value than the value of the combined resistance R4+R5. The third case is the regular operating mode: the DC/DC converter 120 operates normally and provides a DC voltage of 24 V, and the output switch 148 is closed. Consequently, Vi has a value of 24 V and Vo also has a value of 24 V. Consequently, Vm is also 24 V. Lastly, in case of a short circuit to ground of the output terminal 142 while the switch 148 is closed Vi and Vo are both 0 V. Hence, the measured voltage Vm is also 0 V. Therefore, a short circuit to ground can be detected at the measurement terminal by detecting a 0 V signal while the transistor 148 is conductive.

**REFERENCE NUMERALS**

| **Reference Numeral** | **Description** |
|---|---|
| 100 | Contactless connector system |
| 101 | First terminal |
| 102 | Power transmitting connector |
| 103 | Second terminal |
| 104 | Power receiving connector |
| 106 | DC/DC converter |
| 108 | DC/AC converter |
| 110 | Primary sided resonant circuit |
| 112 | Mating surface of power transmitting connector |
| 114 | Mating surface of power receiving connector |
| 116 | Secondary sided resonant circuit |
| 118 | Rectifier circuit |
| 120 | DC/DC converter |
| 122 | Primary sided data communication interface |
| 124 | Primary sided data transceiver element |
| 126 | Primary sided antenna element |
| 128 | Secondary sided data transceiver element |
| 130 | Secondary sided antenna element |
| 132 | Secondary sided data communication interface |
| 134 | Primary sided control unit |
| 136 | Secondary sided control unit |
| 138 | Control signal |
| 140 | Switching unit |
| 142 | Power input/output terminal |
| 144 | Control signal |
| 145 | Measurement signal |
| 146 | Power supply to secondary sided control unit |
| 147 | Node between DC/DC converter and source of MOSFET |
| 148 | MOSFET |
| 150 | Bipolar transistor |
| 200 | Contactless connector system |
| 202 | Power transmitting connector |
| 204 | Power receiving connector |
| 206 | DC/DC converter |
| 208 | DC/AC converter |
| 210 | Primary sided resonant circuit |
| 212 | Mating surface of power transmitting connector |
| 214 | Mating surface of power receiving connector |
| 216 | Secondary sided resonant circuit |
| 218 | Rectifier circuit |
| 220 | DC/DC converter |
| 222 | Primary sided data communication interface |
| 224 | Primary sided transceiver element |
| 226 | Primary sided antenna element |
| 228 | Secondary sided transceiver element |
| 230 | Secondary sided antenna element |
| 232 | Secondary sided data communication interface |
| 234 | Primary sided control unit |

## Claims

1. Power receiving connector (104) for a contactless connector system (100), said power receiving connector (104) being mateable with a power transmitting connector (102) and comprising:
a secondary sided inductive coupling element (Ls) that is operable to receive electric power when being electromagnetically coupled with a primary sided inductive coupling element (Lp) of said power transmitting connector (102),
a power input/output terminal (142) for outputting the received electric power to a secondary sided external component connected to said power receiving connector (104), or for receiving power from an external secondary sided power source,
a secondary sided data transceiver element (128) which in the mated state of the power transmitting (102) and the power receiving (104) connectors is operable to form a data link with a primary sided data transceiver element (124),
a secondary sided data communication interface (132) connected to said secondary sided data transceiver element (128) for communicating with said secondary sided external component,
a secondary sided control unit (136) for controlling an operation of said secondary sided data communication interface (132) and said secondary sided data transceiver element (128), said secondary sided control (136) unit having a power supply terminal (146) for being supplied with electrical power,
**characterized in** comprising that said power receiving connector (104) further comprises a switching unit (140) that is connected to said power input/output terminal (142) for controlling the electric power output at the power input/output terminal (142), wherein the switching unit (140) is further operable to connect said power supply terminal (146) either to the secondary sided inductive coupling element (Ls) or to the power input/output terminal (142).

2. Power receiving connector (104) according to claim 1, wherein said switching unit (140) comprises
a metal oxide semiconductor field effect transistor, MOSFET, (148) with a gate terminal (G), a source terminal (S), and a drain terminal (D), the MOSFET (148) being operable to provide a connection from the secondary sided inductive coupling element (Ls) to the power input/output terminal (142) via a drain-source conductive channel, and which is further operable to provide a connection from the power input/output terminal (142) to the power supply terminal of the secondary sided control unit via a drain-source body diode (D2).

3. Power receiving connector (104) according to claim 2, wherein said MOSFET (148) is a p-channel MOSFET of the enhancement type.

4. Power receiving connector (104) according to one of the claims 1 to 3, wherein a diode (D1) is arranged between said power supply terminal of the secondary sided control unit (136) and said switching unit (140), the cathode (K) of the diode (D1) being connected with the power supply terminal (146).

5. Power receiving connector (104) according to one of the claims 1 to 4, wherein said secondary sided control unit (136) has a control output terminal (144) for providing a control signal to a control input terminal of said switching unit (140).

6. Power receiving connector (104) according to claim 2 and 5, wherein a gate terminal (G) of said MOSFET (148) is connected to a drive circuit, said drive circuit being controlled by said secondary sided control unit (136).

7. Power receiving connector (104) according to claim 6, wherein said drive circuit comprises a level shifting element for providing a suitable control voltage to the gate terminal of the MOSFET.

8. Contactless connector system (100) comprising:
a power transmitting connector (102) having
a primary sided inductive coupling element (Lp) that is connected to a power input terminal connectable to a power source providing an input power,
a resonant circuit for generating a magnetic field at said first inductive coupling element (Lp) from said input power,
a primary sided data transceiver element (124) for transmitting and receiving data, so that a data link is formed between said transmitting and receiving connectors,
a primary sided data communication interface (122) connected to said primary sided data transceiver element (124) for communicating with a first external component connected to said power transmitting connector (102), and
a primary sided control unit (134) for controlling an operation of said resonant circuit, said primary sided data communication interface (122), and said first data transceiver element (124),
a power receiving connector (104) according to one of the preceding claims.

9. Contactless connector system (100) according to claim 8, wherein said primary sided data transceiver element (124) comprises a primary sided antenna element (126) and said secondary sided data transceiver element (128) comprises a secondary sided antenna element (130), wherein said antenna elements in a mated state of the connector system (100) are operable to allow a radio frequency communication.

10. Method of controlling a contactless connector system (100) for inductively transmitting power between a power transmitting connector (102) and a power receiving connector, connector (104) the method comprising, in a first operational mode, the steps of:
generating a magnetic field at a first inductive coupling element (Lp) by transforming an input power by means of a resonant circuit,
operating a secondary sided inductive coupling element to receive electric power when being electromagnetically coupled with said primary sided inductive coupling element,
establishing a data link between said power transmitting connector and said power receiving connector,
wherein the method further comprises, in a second operational mode, the steps of:
controlling a switching unit to disconnect a power supply terminal of a secondary sided control unit from the secondary sided inductive coupling element (Ls) and to connect the power supply terminal to a power input/output terminal connectable to an external secondary sided power source.

11. Method according to claim 10, wherein said switching unit is controlled by a control signal generated by said secondary sided control unit.

12. Method according to claim 10 or 11, wherein the switching unit comprises a MOSFET, the drain-source junction of the MOSFET being conducting during said first operational mode and being non-conductive during said second operational mode, and wherein said power supply terminal of the secondary sided control unit is connected to the power input/output terminal via a drain-source body diode of said MOSFET.

13. Method according to one of the claims 10 to 12, wherein said first operational mode is a regular operating mode where the secondary sided control unit is supplied with power received by the secondary sided inductive coupling element when being electromagnetically coupled with said primary sided inductive coupling element, and wherein said second operational mode is a maintenance mode where the secondary sided inductive coupling element is not coupled to the primary sided inductive coupling element.

14. Method according to claim 13, wherein during the maintenance mode an external secondary sided DC power source is connected to said power input/output terminal and diagnostic and/or programming data are transmitted to/from an external controller via a secondary sided data interface of the power receiving connector.

15. Method according to one of the claims 10 to 14, wherein the secondary sided control unit receives via said data link information indicative of a power level transmitted from the primary side, and wherein the secondary sided control unit controls said switching unit to be non-conductive in case the power level exceeds a pre-determined threshold, so that no electric power is output at the power input/output terminal.

## Patentansprüche

1. Strom empfangender Steckverbinder (104) für ein kontaktloses Steckverbindersystem (100), wobei der Strom empfangende Steckverbinder (104) mit einem Strom sendenden Steckverbinder (102) verbunden werden kann und umfasst:
ein sekundärseitiges induktives Kopplungselement (Ls), das betriebsfähig ist zum Empfangen von Strom, wenn es elektromagnetisch mit einem primärseitigen induktiven Kopplungselement (Lp) des Strom sendenden Steckverbinders (102) gekoppelt ist,
einen Strom-Ein-/Ausgabeanschluss (142) zum Ausgeben des empfangenen Stroms zu einer sekundärseitigen externen Komponente, die mit dem Strom empfangenen Steckverbinder (104) verbunden ist, oder zum Empfangen von Strom von einer externen sekundärseitigen Stromquelle,
ein sekundärseitiges Datensendeempfängerelement (128), das in dem verbundenen Zustand des Strom sendenden Steckverbinders (102) und des Strom empfangenen Steckverbinders (104) betriebsfähig ist zum Herstellen einer Datenverbindung mit einem primärseitigen Datensendeempfängerelement (124)
eine sekundärseitige Datenkommunikationsschnittstelle (132), die mit dem sekundärseitigen Datensendeempfängerelement (128) für eine Kommunikation mit der sekundärseitigen externen Komponente verbunden ist,
eine sekundärseitige Steuereinheit (136) zum Steuern des Betriebs der sekundärseitigen Datenkommunikationsschnittstelle (132) und des sekundärseitigen Datensendeempfängerelements (128), wobei die sekundärseitige Steuereinheit (136) einen Stromversorgungsanschluss (146) für eine Versorgung mit Strom aufweist,
**dadurch gekennzeichnet, dass**
der Strom empfangende Steckverbinder (104) weiterhin eine Schalteinheit (140) umfasst, die mit dem Strom-Ein-/Ausgebeanschluss (142) verbunden ist zum Steuern der Ausgabe von Strom an dem Strom-Ein-/Ausgabeanschluss (142), wobei die Schalteinheit (140) weiterhin betriebsfähig ist zum Verbinden des Stromversorgungsanschlusses (146) mit dem sekundärseitigen induktiven Kopplungselement (Ls) oder mit dem Strom-Ein-/Ausgabeanschluss (142).

2. Strom empfangender Steckverbinder (104) nach Anspruch 1, wobei die Schalteinheit (140) einen Metalloxidhalbleiter-Feldeffekttransistor (MOSFET) (148) mit einem Gate-Anschluss (G), einem Source-Anschluss (S) und einem Drain-Anschluss (D) umfasst, wobei der MOSFET (148) betriebsfähig ist zum Vorsehen einer Verbindung von dem sekundärseitigen induktiven Kopplungselement (Ls) zu dem Strom-Ein-/Ausgabeanschluss (142) über einen Drain-Source-Leitungskanal und der weiterhin betriebsfähig ist zum Vorsehen einer Verbindung von dem Strom-Ein-/Ausgabeanschluss (142) zu dem Stromversorgungsanschluss der sekundärseitigen Steuereinheit über eine Drain-Source-Körperdiode (D2).

3. Strom empfangender Steckverbinder (104) nach Anspruch 2, wobei der MOSFET (148) ein p-Kanal-MOSFET des Anreicherungstyps ist.

4. Strom empfangender Steckverbinder (104) nach einem der Ansprüche 1 bis 3, wobei eine Diode (D1) zwischen dem Stromversorgungsanschluss der sekundärseitigen Steuereinheit (136) und der Schalteinheit (140) angeordnet ist, wobei die Kathode (K) der Diode (D1) mit dem Stromversorgungsanschluss (146) verbunden ist.

5. Strom empfangender Steckverbinder (104) nach einem der Ansprüche 1 bis 4, wobei die sekundärseitige Steuereinheit (136) einen Steuerausgangsanschluss (144) für das Vorsehen eines Steuersignals zu einem Steuereingangsanschluss der Schalteinheit (140) aufweist.

6. Strom empfangender Steckverbinder (104) nach Anspruch 2 und 5, wobei ein Gate-Anschluss (G) des MOSFET (148) mit einer Treiberschaltung verbunden ist, wobei die Treiberschaltung durch die sekundärseitige Steuereinheit (136) gesteuert wird.

7. Strom empfangender Steckverbinder (104) nach Anspruch 6, wobei die Treiberschaltung ein Pegelverschiebungselement zum Vorsehen einer geeigneten Steuerspannung zu dem Gate-Anschluss des MOSFET umfasst.

8. Kontaktloses Steckverbindersystem (100), umfassend:
einen Strom sendenden Steckverbinder (102), der aufweist:
ein primärseitiges induktives Kopplungselement (Lp), das mit einem Stromeingangsanschluss verbunden ist, der mit einer einen Eingangsstrom vorsehenden Stromquelle verbunden werden kann,
eine Resonanzschaltung zum Erzeugen eines Magnetfelds an dem ersten induktiven Kopplungselement (Lp) aus dem Eingangsstrom,
ein primärseitiges Datensendeempfängerelement (124) zum Senden und Empfangen von Daten, sodass eine Datenverbindung zwischen den sendenden und den empfangenden Steckverbindern hergestellt wird,
eine primärseitige Datenkommunikationsschnittstelle (122), die mit dem primärseitigen Datensendeempfängerelement (124) für eine Kommunikation mit einer mit dem Strom sendenden Steckverbinder (102) verbundenen ersten externen Komponente verbunden ist, und
eine primärseitige Steuereinheit (134) zum Steuern des Betriebs der Resonanzschaltung, der primärseitigen Datenkommunikationsschnittstelle (122) und des ersten Datensendeempfängerelements (124),
einen Strom empfangenden Steckverbinder (104) gemäß einem der vorstehenden Ansprüche.

9. Kontaktloses Steckverbindersystem (100) nach Anspruch 8, wobei das primärseitige Datensendeempfängerelement (124) ein primärseitiges Antennenelement (126) umfasst und das sekundärseitige Datensendeempfängerelement (128) ein sekundärseitiges Antennenelement (130) umfasst, wobei die Antennenelemente in einem verbundenen Zustand des Steckverbindersystems (100) betriebsfähig sind für eine Hochfrequenzkommunikation.

10. Verfahren zum Steuern eines kontaktlosen Steckverbindersystems (100) für das induktive Senden von Strom zwischen einem Strom sendenden Steckverbinder (102) und einem Strom empfangenen Steckverbinder (104), wobei das Verfahren in einem ersten Betriebsmodus die folgenden Schritte umfasst:
Erzeugen eines Magnetfelds an einem ersten induktiven Kopplungselement (Lp) durch das Wandeln eines Eingangsstroms mittels einer Resonanzschaltung,
Betreiben eines sekundärseitigen induktiven Kopplungselements für das Empfangen von Strom, wenn es elektromagnetisch mit dem primärseitigen induktiven Kopplungselement gekoppelt ist,
Herstellen einer Datenverbindung zwischen dem Strom sendenden Steckverbinder und dem Strom empfangenden Steckverbinder,
wobei das Verfahren weiterhin in einem zweiten Betriebsmodus den folgenden Schritt umfasst:
Steuern einer Schalteinheit für das Trennen eines Stromversorgungsanschlusses einer sekundärseitigen Steuereinheit von dem sekundärseitigen induktiven Kopplungselement (Ls) und zum Verbinden des Stromversorgungsanschlusses mit einem Strom-Ein-/Ausgabeanschluss, der mit einer externen sekundärseitigen Stromquelle verbunden werden kann.

11. Verfahren nach Anspruch 10, wobei die Schalteinheit durch ein Steuersignal gesteuert wird, das durch die sekundärseitige Steuereinheit erzeugt wird.

12. Verfahren nach Anspruch 10 oder 11, wobei die Schalteinheit einen MOSFET umfasst, wobei der Drain-Source-Übergang des MOSFETs während des ersten Betriebsmodus leitend ist und während des zweiten Betriebsmodus nicht-leitend ist, und wobei der Stromversorgungsanschluss der sekundärseitigen Steuereinheit mit dem Strom-Ein-/Ausgabeanschluss über die Drain-Source-Körperdiode des MOSFET verbunden ist.

13. Verfahren nach einem der Ansprüche 10 bis 12, wobei der erste Betriebsmodus ein regulärer Betriebsmodus ist, in dem die sekundärseitige Steuereinheit mit Strom versorgt wird, der durch das sekundärseitige induktive Kopplungselement empfangen wird, wenn dieses elektromagnetisch mit dem primärseitigen induktiven Kopplungselement gekoppelt ist, und wobei der zweite Betriebsmodus ein Wartungsmodus ist, in dem das sekundärseitige induktive Kopplungselement nicht mit dem primärseitigen induktiven Kopplungselement gekoppelt ist.

14. Verfahren nach Anspruch 13, wobei während des Wartungsmodus eine externe sekundärseitige Gleichstromquelle mit dem Strom-Ein-/Ausgabeanschluss verbunden ist und Diagnose- und/oder Programmierdaten zu/von einer externen Steuereinrichtung über eine sekundärseitige Datenschnittstelle des Strom empfangenen Steckverbinders empfangen werden.

15. Verfahren nach einem der Ansprüche 10 bis 14, wobei die sekundärseitige Steuereinheit über die Datenverbindung Informationen empfängt, die einen von der primären Seite gesendeten Strompegel angeben, und wobei die sekundärseitige Steuereinheit die Schalteinheit derart steuert, dass diese nicht-leitend ist, wenn der Strompegel einen vorbestimmten Schwellwert überschreitet, sodass kein Strom an dem Strom-Ein-/Ausgabeanschluss ausgegeben wird.

## Revendications

1. Connecteur de réception de courant (104) pour un système de connecteur sans contact (100), ledit connecteur de réception de courant (104) pouvant être couplé à un connecteur de transmission de courant (102) et comprenant: un élément de couplage inductif côté secondaire (Ls) qui peut fonctionner pour recevoir du courant électrique lorsqu'il est couplé électromagnétiquement avec un élément de couplage inductif côté primaire (Lp) dudit connecteur de transmission de courant (102),
une borne d'entrée/sortie de courant (142) pour délivrer le courant électrique reçu à un composant externe côté secondaire connecté audit connecteur de réception de courant (104), ou pour recevoir du courant d'une source de courant côté secondaire externe,
un élément émetteur-récepteur de données côté secondaire (128) qui, dans l'état couplé des connecteurs de transmission de courant (102) et de réception de courant (104), peut être utilisé pour former une liaison de données avec un élément émetteur-récepteur de données côté primaire (124),
une interface de communication de données côté secondaire (132) connectée audit élément émetteur-récepteur de données côté secondaire (128) pour communiquer avec ledit composant externe côté secondaire,
une unité de commande côté secondaire (136) pour commander le fonctionnement de ladite interface de communication de données côté secondaire (132) et dudit élément émetteur-récepteur de données côté secondaire (128), ladite unité de commande côté secondaire (136) ayant une borne d'alimentation de courant (146) pour être alimenté en courant électrique,
**caractérisé en ce que**
ledit connecteur de réception de courant (104) comprend en outre une unité de commutation (140) qui est connectée à ladite borne d'entrée/sortie de courant (142) pour commander la sortie de courant électrique au niveau de la borne d'entrée/sortie de courant (142), dans laquelle l'unité de commutation (140) est en outre utilisable pour connecter ladite borne de courant (146) soit à l'élément de couplage inductif côté secondaire (Ls), soit à la borne d'entrée/sortie de courant (142).

2. Connecteur de réception de courant (104) selon la revendication 1, dans lequel ladite unité de commutation (140) comprend
un transistor à effet de champ à semi-conducteur à oxyde métallique, MOSFET (148) avec une borne de grille (G), une borne de source (S) et une borne de drain (D), le MOSFET (148) pouvant fonctionner pour fournir une connexion à partir de l'élément de couplage inductif côté secondairement (Ls) à la borne d'entrée/sortie de courant (142) par le biais d'un canal conducteur drain-source, pouvant également être connecté à une connexion à partir de la borne d'entrée/sortie de courant (142) vers la borne d'alimentation de courant de l'unité de commande côté secondaire par l'intermédiaire d'une diode de corps drain-source (D2).

3. Connecteur de réception de courant (104) selon la revendication 2, dans lequel ledit MOSFET (148) est un canal p MOSFET du type à enrichissement.

4. Connecteur de réception de courant (104) selon l'une des revendications 1 à 3, dans lequel une diode (D1) est agencée entre ladite borne d'alimentation de courant de l'unité de commande côté secondaire (136) et ladite unité de commutation (140), la cathode (K) de la diode (D1) étant connectée à la borne d'alimentation de courant (146).

5. Connecteur de réception de courant (104) selon l'une des revendications 1 à 4, dans lequel ladite unité de commande côté secondaire (136) présente une borne de sortie de commande (144) pour fournir un signal de commande à une borne d'entrée de commande de ladite unité de commutation (140).

6. Connecteur de réception de courant (104) selon les revendications 2 et 5, dans lequel une borne de grille (G) dudit MOSFET (148) est connectée à un circuit d'attaque, ledit circuit d'attaque étant commandé par ladite unité de commande côté secondaire (136).

7. Connecteur de réception de courant (104) selon la revendication 6, dans lequel ledit circuit d'attaque comprend un élément de décalage de niveau pour fournir une tension de commande appropriée à la borne de grille du MOSFET.

8. Système de connecteur sans contact (100) comprenant:
un connecteur de transmission de courant (102) présentant
un élément de couplage inductif côté primaire (Lp) qui est connecté à une borne d'entrée de courant pouvant être connectée à une source de courant fournissant une puissance d'entrée, un circuit de résonance pour générer un champ magnétique au niveau dudit premier élément de couplage inductif (Lp) à partir dudit courant d'entrée,
un élément émetteur-récepteur de données côté primaire (124) pour émettre et recevoir des données, de sorte qu'une liaison de données est formée entre lesdits connecteurs d'émission et de réception, une interface de communication de données côté primaire (122) connectée audit élément émetteur-récepteur de données côté primaire (124) pour communiquer avec un premier composant externe connecté audit connecteur de transmission de courant (102), et
une unité de commande côté primaire (134) pour commander le fonctionnement dudit circuit de résonance, ladite interface de communication de données côté primaire (122) et ledit premier élément émetteur-récepteur de données (124), un connecteur de réception de courant (104) selon l'une des précédentes réclamations.

9. Système de connecteur sans contact (100) selon la revendication 8, dans lequel ledit élément émetteur-récepteur de données côté primaire (124) comprend un élément d'antenne côté primaire (126) et ledit élément émetteur-récepteur de données côté secondaire (128) comprend un élément d'antenne côté secondaire (130), dans lequel lesdits éléments d'antenne dans un état couplé du système de connecteur (100) permettent une communication à fréquence radio.

10. Procédé de commande d'un système de connecteurs sans contact (100) pour la transmission inductive de courant entre un connecteur de transmission de courant (102) et un connecteur de réception de courant (104), le procédé comprenant, dans un premier mode de fonctionnement, les étapes consistant à:
générer un champ magnétique au niveau d'un premier élément de couplage inductif (Lp) en transformant un courant d'entrée au moyen d'un circuit de résonance,
utiliser un élément de couplage inductif côté secondaire pour recevoir du courant électrique lorsqu'il est couplé électromagnétiquement avec un élément de couplage inductif côté primaire,
établir une liaison de données entre ledit connecteur de transmission de courant et ledit connecteur de réception de courant,
dans lequel le procédé comprend en outre, dans un second mode de fonctionnement, les étapes consistant à:
commander une unité de commutation pour déconnecter une borne d'alimentation d'une unité de commande côté secondaire à partir de l'élément de couplage inductif secondaire (Ls) et pour connecter la borne d'alimentation à une borne d'entrée/sortie de courant d'alimentation pouvant être connectée à une source de courant côté secondaire externe.

11. Procédé selon la revendication 10, dans lequel ladite unité de commutation est commandée par un signal de commande généré par ladite unité de commande côté secondaire.

12. Procédé selon les revendications 10 ou 11, dans lequel l'unité de commutation comprend un MOSFET, la jonction drain-source du MOSFET étant conductrice pendant ledit premier mode de fonctionnement et étant non conductrice pendant ledit second mode de fonctionnement, et dans lequel la borne d'alimentation de courant de l'unité de commande côté secondaire est connectée à la borne d'entrée/sortie de courant par le biais d'une diode de corps drain-source dudit MOSFET.

13. Procédé selon l'une des revendications 10 à 12, dans lequel ledit premier mode de fonctionnement est un mode de fonctionnement normal où l'unité de commande côté secondaire est alimentée par le courant reçu par l'élément de couplage inductif côté secondaire lorsqu'il est électromagnétiquement couplé avec ledit élément de couplage inductif côté primaire, et dans lequel ledit second mode de fonctionnement est un mode de maintenance où l'élément de couplage inductif côté secondaire n'est pas couplé à l'élément de couplage inductif côté primaire.

14. Procédé selon la revendication 13, dans lequel pendant le mode de maintenance une source de courant continu côté secondaire externe est connectée à ladite borne d'entrée/de sortie de courant et/ou les données de diagnostic et/ou programmation sont transmises à/depuis un contrôleur externe par le biais d'une interface de données côté secondaire du connecteur de réception de courant.

15. Procédé selon l'une des revendications 10 à 14, dans lequel l'unité de commande côté secondaire reçoit par le biais de ladite liaison de données des informations indiquant un niveau de courant transmis depuis le côté primaire, et dans lequel l'unité de commande côté secondaire commande à ladite unité de commutation d'être non conductrice si le niveau de courant dépasse un seuil prédéterminé, de sorte qu'aucun courant électrique n'est transmis à la borne d'entrée/sortie de courant.
